# EUROPÄISCHE PATENTSCHRIFT

(11) **EP 0 578 116 B1**
(45) Veröffentlichungstag und Bekanntmachung des Hinweises auf die Patenterteilung: **06.09.1995**
(21) Anmeldenummer: 93110415.2
(22) Anmeldetag: 30.06.1993
(51) Int. Cl.: H01G 4/40, H02M 3/00, H01L 25/00

(54) **Ausgangskondensatoranordnung eines Schaltnetzteils**
Output capacitor arrangement of a switched-mode power supply
Arrangement de condensateur de sortie d'un dispositif d'alimentation en courant commuté

(30) Priorität: 04.07.1992 DE 4222068
(43) Veröffentlichungstag der Anmeldung: 12.01.1994
(73) Patentinhaber: ABB PATENT GmbH, 68309 Mannheim (DE)
(72) Erfinder: Walther, Peter, D-6120 Michelstadt (DE); Langemeyer, Laurenz, D-6936 Schönbrunn-Haag (DE)
(74) Vertreter: Rupprecht, Klaus, Dipl.-Ing.

(56) Entgegenhaltungen:
- EP-A- 0 334 520
- DE-A- 3 900 512
- DE-U- 9 007 402

## Beschreibung

Die Erfindung bezieht sich auf eine Ausgangskondensatoranordnung eines Schaltnetzteils, die mindestens zwei elektrisch parallel geschaltete Einzelkondensatoren und zur Gleichstromführung eine massive Minuspol-Metallschiene und eine elektrisch dagegen isolierte Pluspol-Metallschiene aufweist.

Eine solche Anordnung und ein Schaltnetzteil, das die Kondensatoranordnung enthält, ist aus dem deutschen Gebrauchsmuster G 90 07 402 bekannt.

Das dort beschriebene Schaltnetzteil weist auf der Sekundärseite eines Transformators einen als breiten Flachleiter ausgeführten elektrischen Leiter auf, der als Sekundärwicklung um einen Schenkel des Transformators geführt ist und der unter Zwischenschaltung einer Gleichrichteranordnung als parallelgeführtes Flachleiterpaar durch Kernteile einer Glättungsinduktivität zu Ausgangsklemmen geführt ist. Im Bereich zwischen der Glättungsinduktivität und den Ausgangsklemmen ist eine Ausgangskapazität in Form einer Mehrzahl parallelgeschalteter Kondensatoren angeordnet. Die Kondensatoren sind auf einem der Flachleiter oder zwischen den beiden Flachleitern angeordnet und mit diesen kontaktiert. Die erfindungsgemäße Kondensatoranordnung ist zur Anwendung als Ausgangskapazität in einem solchen Schaltnetzteil geeignet, jedoch auch zur Verwendung in anderen Schaltnetzteilen.

In Schaltnetzteilen mit hoher Schaltfrequenz und einstufigem Ausgangsfilter werden Filterkondensatoren benötigt, die einen möglichst geringen Ersatz-Serienwiderstand ESR aufweisen, z.B. bezogen auf die gesamte Kondensatorbank weniger als 1 Milliohm. Wenn die zu filternden Frequenzen groß sind, z.B. 50 bis 500 kHz, hat neben dem ESR besonders die Ersatz-Serieninduktivität ESL des Kondensators einen entscheidenden Einfluß. Es werden z.B. ESL-Werte < 1 nH für die Kondensatorgesamtanordnung gefordert. Bei Parallelschaltung mehrerer Kondensatoren müssen diese Anforderungen berücksichtigt werden, und außerdem, daß eine gleichmäßig hohe Wechselstrombelastung der Einzelkondensatoren erreicht werden soll. In Schaltnetzteilen mit hohen Ausgangsströmen müssen die Kondensatoren unter Einhaltung der Induktivitätsbedingungen an massive Kupferschienen angeschlossen werden.

Mit der aus der Druckschrift G 90 07 402 bekannten Filteranordnung können diese Anforderungen nicht in zufriedenstellender Weise erfüllt werden, insbesondere ist die Anbindung der Kondensatoren nicht ausreichend niederinduktiv.

Der Erfindung liegt daher die Aufgabe zugrunde, eine Ausgangsfilteranordnung mit niederinduktiver Ankopplung parallelgeschalteter Kondensatoren an gleichstromführende Stromschienen anzugeben.

Diese Aufgabe wird gelöst durch eine im Patentanspruch 1 angegebene Ausgangskondensatoranordnung eines Schaltnetzteils, die mehrere elektrisch parallel geschaltete Einzelkondensatoren und zur Gleichstromführung eine massive Minuspol-Metallschiene und eine elektrisch dagegen isolierte Pluspol-Metallschiene aufweist, wobei
a) die Einzelkondensatoren auf wenigstens einem Substrat angeordnet sind, das aus einer Übereinanderschichtung einer Pluspol-Metallfolie, einer Isolierfolie und einer Minuspol-Metallfolie besteht,
b) zur Realisierung der Kondensator-Parallelschaltung die Pluspole der Kondensatoren jeweils mit der Pluspol-Folie und die Minuspole der Kondensatoren jeweils mit der Minuspol-Folie elektrisch leitend verbunden sind, und
c) im Eingangs- und/oder im Ausgangsbereich der Ausgangskondensatoranordnung die Minuspol-Metallschiene mit der Minuspol-Metallfolie sowie die Pluspol-Metallschiene mit der Pluspol-Metallfolie elektrisch leitend verbunden sind.

Vorteilhafte Ausgestaltungen sind in Unteransprüchen angegeben und ergeben sich auch aus der unten stehenden Beschreibung eines Ausführungsbeispiels.

Mit der Erfindung wird mit Hilfe des kondensatorbestückten Substrats auf vorteilhafte Weise eine extrem niederinduktive Ankopplung der parallelgeschalteten Kondensatoren an die Gleichstromschienen und zugleich eine gleichmäßige Stromaufteilung zwischen den Einzelkondensatoren erreicht. Die Stromaufteilung wird praktisch durch ESR und ESL der Einzelkondensatoren bestimmt. Mit der besonders niederinduktiven Ankopplung wird außerdem erreicht, daß die gesamte Ausgangskapazität eines Schaltnetzteils als Stabilisierungskondensator auch nach außen hin zur Verfügung steht, also für eine Stabilisierung der Ausgangsspannung bei schnellen Lastwechseln sorgt. Es können somit bei angeschlossenen Gleichstromverbrauchern weitere Glättungskondensatoren eingespart werden.

Regelungstechnisch stellt diese Ausgangskondensatoranordnung zusammen mit der in einem Schaltnetzteil vorgeschalteten Drosselspule eine einstufige Filtereinheit dar. Dies ergibt eine einfache Regelbarkeit des Gesamtsystems.

Ein weiterer Vorteil besteht in der guten Kühlbarkeit der Anordnung, da eine gute thermische Ankopplung der Kondensatoren über das Substrat und eine der Gleichstromschienen an einen Kühlkörper erreichbar ist.

Die Herstellung der Kondensatoranordnung kann weitgehend automatisiert werden, insbesondere kann das Verlöten der Kondensatoren mit dem Substrat mit Lötautomaten erfolgen.

Eine ausführlichere Beschreibung der Ausgangskondensatoranordnung erfolgt nachstehend anhand von Ausführungsbeispielen, die in der Zeichnung dargestellt sind. Figur 1 zeigt eine Kondensatoranordnung und Figur 2 eine Detaildarstellung des Substrats für ein erstes Beispiel. Figur 3 zeigt ein zweites Ausführungsbeispiel.

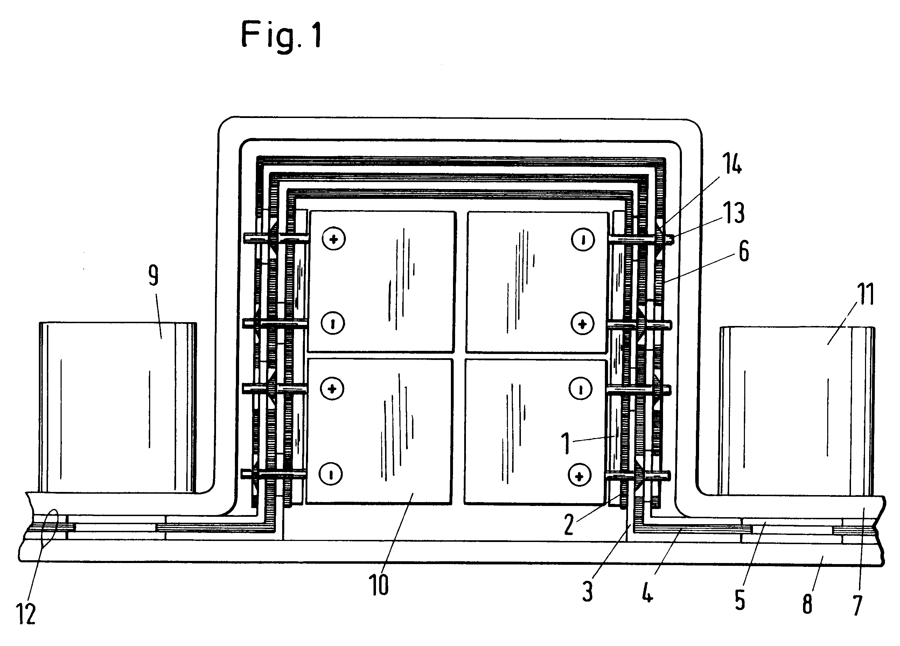

Figur 1 zeigt eine Seitenansicht eines Ausgangsteils eines Schaltnetzteils, dessen übrige Teile nicht dargestellt sind. Dieses Ausgangsteil stellt eine erfindungsgemäße Ausgangskondensatoranordnung dar. Die Anordnung enthält eine Pluspol-Metallschiene 8 und eine Minuspol-Metallschiene 7, die einen Gleichstrom führen. Diese Metallschienen 7, 8 bestehen aus einem elektrisch gut leitenden Metall, z.B. Kupfer. Die Minuspolschiene 7 ist in einer Mäanderschleife geführt, so daß ein Raum zwischen den Metallschienen 7, 8 vorhanden ist, der im wesentlichen durch Einzelkondensatoren 10 ausgefüllt ist. Die Kondensatoren 10 sind mit einem Substrat 12 verbunden, das aus einer Übereinanderschichtung einer Pluspol-Metallfolie 3, einer Isolierfolie 4 und einer Minuspol-Metallfolie 5 besteht. Die Metallfolien 3, 5 können aus Kupfer bestehen, die Isolierfolien z.B. aus Polyimid. Die Folien 3, 4, 5 können z.B. durch Kleben oder Pressen miteinander verbunden sein.

Im Ausführungsbeispiel ist eine bevorzugte mäanderförmige Führung des Substrats 12 entsprechend der Form der Minuspol-Metallschiene 7 dargestellt. Das Substrat 12 könnte aber auch in anderer Weise, z.B. parallel zu der ebenen Pluspol-Metallschiene 8 geführt sein.

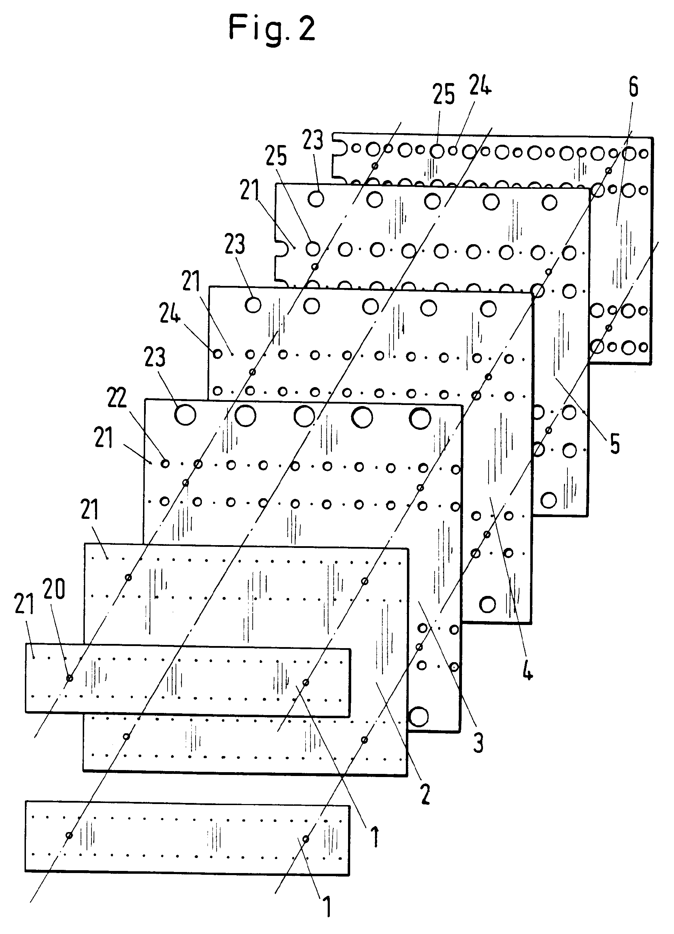

Die Einzelkondensatoren 10 sind z.B. radial bedrahtete Standard-Kondensatoren mit bauteileigenem ESR und ESL. Die Kondensatoren 10 sind in Figur 1 aus Darstellungsgründen um 90° gedreht dargestellt, so daß die Kondensator-Anschlußbeine 13 übereinander statt hintereinander liegen. Dies ist beim Vergleich mit der Figur 2 zu beachten.

Die positiven und negativen Anschlußbeine 13 der Kondensatoren 10 sind an Lötstellen 14 mit den entsprechenden Metallfolien 3, 5 verlötet.

In den Figuren 1 und 2 sind außer den für das Substrat 12 erforderlichen Folien 3, 4, 5 noch weitere Schichtelemente dargestellt, die zur praktischen Ausführung der Kondensatoranordnung zweckmäßig sind. So ist auf der Pluspol-Metallfolie 3 eine elektrisch isolierende Schutzfolie 2 angeordnet, die als Oberflächenschutz und als Lötstopp wirkt. Auf der Schutzfolie 2 ist in Teilbereichen eine Verstärkungsplatte 1 angeordnet, die das flexible Substrat 12 flach drückt. Auf der anderen Seite des Substrats 12, nämlich auf der Minuspol-Metallfolie 5 ist eine Lötstoppfolie 6 oder eine gleichwirkende Lackschicht aufgebracht.

Das Substrat 12 muß wenigstens im Eingangsbereich oder im Ausgangsbereich der Gesamtanordnung einen guten elektrischen Kontakt mit den Gleichstromschienen 7, 8 haben. Der Kontakt kann auch an diesen beiden Stellen hergestellt sein, wie in Figur 1 dargestellt ist. Die notwendige Verbindung kann unter Berücksichtigung der erforderlichen elektrischen Isolierung zwischen Plus- und Minuspol z.B. durch Löten, Klammern oder Verschrauben hergestellt werden. In Figur 1 sind Schraubverbindungen mittels Klemmleisten 9, 11 angedeutet, wobei die Metallschrauben und zugehörige Isolierteile nicht dargestellt sind. Unter Klemmleisten sind hier nicht elektrische Anschlußleisten zu verstehen, sondern Reihen von Schraubverbindungen, die das Substrat 12 mit den Metallschienen 7 und 8 verbinden.

Figur 2 zeigt die erforderlichen Bohrungen in den einzelnen Schichtelementen 1 bis 6. Alle Elemente 1 bis 6 weisen Justierlöcher 20 auf, die zur Justierung der Schichtelemente während der Herstellung benötigt werden. Die Verstärkungsplatten 1 und die Schutzfolie 2 haben Durchführungslöcher 21 für die Kondensator-Anschlußbeine 13 (Figur 1). Die Pluspol-Metallfolie 3 hat Durchführungen 21 für die positiven Anschlußbeine der Kondensatoren, die an diesen Stellen mit der Folie 3 verlötet werden. Größere Durchführungslöcher 22 sind für die isolierte Durchführung der negativen Kondensator-Anschlußbeine 13 vorhanden. Große Bohrungen 23 dienen zur isolierten Durchführung von Befestigungsschrauben der Klemmleisten 9, 11, die zur Kontaktierung des Substrats 12 mit den Gleichstromschienen 7, 8 vorgesehen sind.

Die Isolierfolie 4 hat neben den großen Bohrungen 23 Durchführungen 21 für die negativen Kondensator-Anschlußbeine 13 und große Lötöffnungen 24, die eine Lotzufuhr zu den Lötstellen an der Metallfolie 3 ermöglichen.

Die Minuspol-Metallfolie 5 hat die großen Bohrungen 23 für Befestigungsschrauben und Durchführungen 21 für die negativen Kondensator-Anschlußbeine, die mit der Folie 5 verlötet werden. Außerdem sind ausreichend große Öffnungen 25 im Bereich der positiven Anschlußbeine vorhanden, um eine Lotbrücke zwischen diesen Anschlüssen und der Folie 5 zu verhindern. Die isolierenden Folien 2, 4, 6 können alle aus Polyimid hergestellt werden, die Metallfolien 3, 5 aus z.B. 70 µm dicken Kupferfolien.

Zur Herstellungsmöglichkeit der Ausgangsfilteranordnung ist ergänzend zu vorstehenden Ausführungen zu erläutern, daß das mehrschichtige Substrat flachliegend bestückt und mit einem Lötautomaten, z.B. mit einer Lötwelle verlötet werden kann, wobei alle Kondensatoren elektrisch parallel geschaltet werden durch Verbinden der jeweiligen Anschlußbeine mit den zugehörigen Metallfolien des Substrats. Das bestückte und verlötete Substrat kann anschließend als Kondensatorbank entsprechend der Darstellung in Figur 1 gefaltet und zwischen die Gleichstromschienen montiert werden. Bei dieser Montage wird mit Hilfe von Schrauben in den Klemmleisten 9, 11 ein Druckkontakt jeweils zwischen Pluspolschiene 8 und Pluspol-Folie 3 bzw. Minuspolschiene 7 und Minuspol-Folie 5 hergestellt. Die Schrauben müssen entsprechend isoliert durch die Schienen und Folien geführt werden, um einen Kurzschluß zu verhindern. Die Verbindung der zusammengehörenden Folien und Schienen kann durch einen Lötkontakt hergestellt werden. Die Wirkungsweise der Kondensatoren als Ausgangsteils eines Schaltnetzteils ergibt sich aus nachstehenden Ausführungen.

Der Ausgangsgleichstrom des Schaltnetzteils fließt den Weg des geringsten Widerstands, also über die massiven Stromschienen 7, 8, die einen großen Metallquerschnitt haben. Dieser Weg führt außen an den Kondensatoren vorbei. Wegen dieses gesonderten Gleichstrompfades lassen sich in der Anordnung hohe Ausgangsgleichströme z.B. im Bereich 100 A bis 10 kA durch entsprechend große Metallquerschnitte realisieren.

Der Wechselstromanteil im Ausgangsstrom fließt den Weg des geringsten Wechselstromwiderstandes. Bei entsprechender Höhe der Frequenz z.B. im Bereich von 50 bis 500 kHz wird der Wechselstromwiderstand hauptsächlich durch den induktiven Anteil bestimmt. In dem stromkompensierten Substrat findet der Wechselstromanteil nahezu keine Induktivität vor. Ein Wechselstromfluß durch die außenliegenden Stromschienen 7, 8 würde eine große Schleife aufspannen, was eine hohe Induktivität bedeutet. Der Wechselstrom fließt also praktisch nur in dem Substrat 12, an dem direkt die Kondensatoren 10 angebunden sind, die den Wechselstromanteil aufnehmen und filtern.

Die Wechselstromaufteilung der Kondensatoren untereinander erfolgt entsprechend der jeweiligen Serieninduktivität der einzelnen Kondensatoren. Da die Induktivität des Substrates gegenüber der Eigeninduktivität des Kondensators gering ist, spielt die Lage eines Kondensators für die Wechselstrombelastung nur eine untergeordnete Rolle. Bei gleicher inneren Induktivität sind alle Kondensatoren etwa gleich gut angekoppelt. Es entsteht somit eine ausgeglichene Stromaufteilung auf alle angeschlossenen Kondensatoren.

Wesentlich ist auch, daß am Ausgang die gesamte Kapazität der parallelgeschalteten Einzelkondensator niederinduktiv angekoppelt zur Verfügung steht. Dadurch ergibt sich in dieser Anordnung eine sehr gute Stabilität der Ausgangsspannung bei schnellen Lastwechseln.

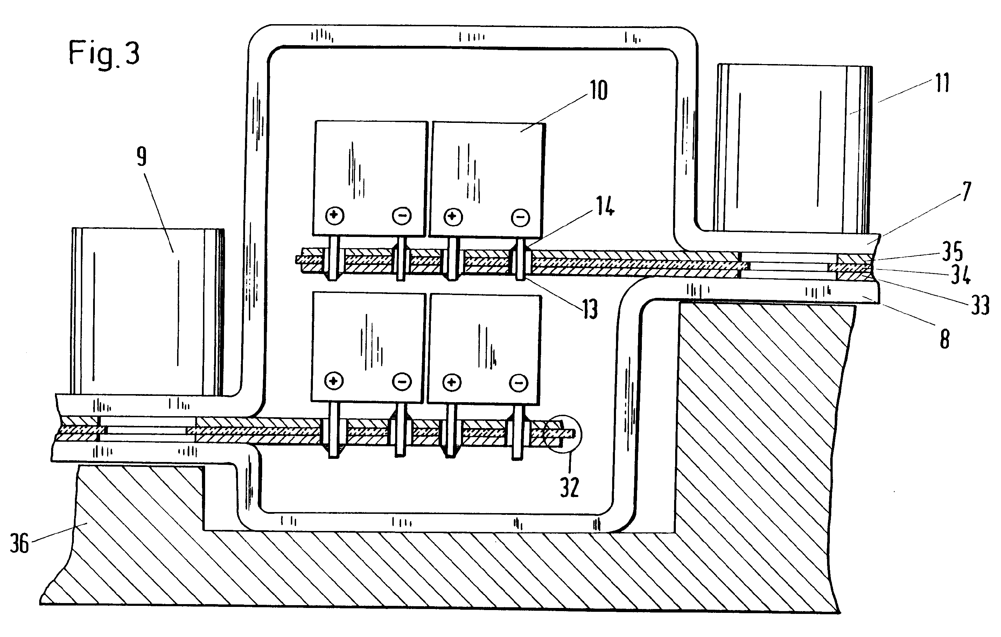

Figur 3 zeigt ein zweites Ausführungsbeispiel für eine Ausgangskondensatoranordnung. Ggenüber der in Figur 1 gezeigten Anordnung ist das dortige Substrat 12 ersetzt durch zwei Substrate 32, die jeweils gebildet sind durch eine gedruckte Leiterplatte (PCB = printed circuit board). Ein solches Substrat 32 besteht aus einer elektrisch isolierenden Leiterplatte 34, die auf beiden Hauptflächen mit einer Metallkaschierung 33, 35 versehen ist. Auch eine solche Anordnung kann auf einen Kühlkörper 36 montiert werden. Die in Figur 3 dargestellte Ausgangskondensatoranordnung hat zwar etwas ungünstigere Filtereigenschaften, als die in Figur 1 gezeigte Anordnung, ist aber mit geringerem Aufwand herstellbar.

## Patentansprüche

1. Ausgangskondensatoranordnung eines Schaltnetzteils, die mehrere elektrisch parallel geschaltete Einzelkondensatoren (10) und zur Gleichstromführung eine massive Minuspol-Metallschiene (7) und eine elektrisch dagegen isolierte Pluspol-Metallschiene (8) aufweist, dadurch gekennzeichnet, daß
a) die Einzelkondensatoren (10) auf wenigstens einem Substrat (12,32) angeordnet sind, das aus einer Übereinanderschichtung einer Pluspol-Metallfolie (3,33), einer Isolierfolie (4,34) und einer Minuspol-Metallfolie (5,35) besteht,
b) zur Realisierung der Kondensator-Parallelschaltung die Pluspole der Kondensatoren (10) jeweils mit der Pluspol-Folie (3,33) und die Minuspole der Kondensatoren (10) jeweils mit der Minuspol-Folie (5,35) elektrisch leitend verbunden sind, und
c) im Eingangs- und/oder im Ausgangsbereich der Ausgangskondensatoranordnung die Minuspol-Metallschiene (7) mit der Minuspol-Metallfolie (5,35) sowie die Pluspol-Metallschiene (8) mit der Pluspol-Metallfolie (3,33) elektrisch leitend verbunden sind.

2. Anordnung nach Anspruch 1, dadurch gekennzeichnet, daß die Metallfolien (3,5,33,35) des Substrats (12,32) 20 bis 500 µm, bevorzugt 100 µm, dick sind.

3. Anordnung nach Anspruch 1 oder 2, dadurch gekennzeichnet, daß das Substrat (12) ein- oder mehrfach mäanderförmig gefaltet ist.

4. Anordnung nach einem der vorstehenden Ansprüche, dadurch gekennzeichnet, daß die Metallschienen (7,8) und die Metallfolien (3,5,33,35) aus Kupfer bestehen.

5. Anordnung nach einem der vorstehenden Ansprüche, dadurch gekennzeichnet, daß eine der Schienen (7,8) flach und als Kühler ausgeführt ist oder direkt auf einem Kühlkörper (36) elektrisch isoliert oder nicht isoliert montiert ist.

6. Anordnung nach einem der vorstehenden Ansprüche, dadurch gekennzeichnet, daß das mit Kondensatoren (10) bestückte Substrat (12,32) zwischen den Stromschienen (7,8) angeordnet und großflächig niederinduktiv elektrisch verbunden ist.

7. Anordnung nach einem der vorstehenden Ansprüche, dadurch gekennzeichnet, daß Mittel, z.B. Schrauben oder Lötverbindungen zur mechanischen und elektrischen Kontaktierung des Substrats (12,32) mit den Stromschienen (7,8) vorhanden sind.

8. Anordnung nach einem der vorstehenden Ansprüche, dadurch gekennzeichnet, daß das Substrat (32) mit den übereinandergeschichteten Folien (33 bis 35) als elektrisch isolierende Leiterplatte (24) mit Kupferkaschierungen (33,35) ausgeführt ist.

## Claims

1. Output capacitor arrangement of a switched-mode power supply, which arrangement has a plurality of individual capacitors (10) electrically connected in parallel and, for carrying direct current, a solid negative pole metal rail (7) and a positive pole metal rail (8) which is electrically insulated with respect hereto, characterized in that
a) the individual capacitors (10() are arranged on at least one substrate (12, 32) comprising a lamination of a positive pole metal foil (3, 33), an insulating foil (4, 34) and a negative pole metal foil (5, 35),
b) to implement the parallel connection of the capacitors, the positive poles of the capacitors (10) are each electrically conductively connected to the positive pole foil (3, 33) and the negative poles of the capacitors (10) are each electrically conductively connected to the negative pole foil (5, 35), and
c) in the input and/or in the output region of the output capacitor arrangement, the negative pole metal rail (7) is electrically conductively connected to the negative pole metal foil (5, 35) and the positive pole metal rail (8) is electrically conductively connected to the positive pole metal foil (3, 33).

2. Arrangement according to Claim 1, characterized in that the metal foils (3, 5, 33, 35) of the substrates (12, 32) are 20 to 500 µm, preferably 100 µm, thick.

3. Arrangement according to Claim 1 or 2, characterized in that the substrate (12) is folded once or many times so as to be meandering.

4. Arrangement according to one of the preceding claims, characterized in that the metal rails (7, 8) and the metal foils (3, 5, 33, 35) are composed of copper.

5. Arrangement according to one of the preceding claims, characterized in that one of the rails (7, 8) is designed to be flat and as a cooler, or is mounted directly on a heat sink (36) in an electrically insulated or non-insulated manner.

6. Arrangement according to one of the preceding claims, characterized in that the substrate (12, 32) populated with capacitors (10) is arranged and electrically connected, in a low-inductance manner over a large area, between the busbars (7, 8).

7. Arrangement according to one of the preceding claims, characterized in that means, for example screws or soldered joints, are present for the substrate (12, 32) to make mechanical and electrical contact with the busbars (7, 8).

8. Arrangement according to one of the preceding claims, characterized in that the substrate (32) having the laminated foils (33 to 35) is designed as an electrically insulating printed circuit board (24) [sic] having copper coatings (33, 35).

## Revendications

1. Agencement de condensateurs de sortie d'un dispositif d'alimentation à commutation ou découpage, comprenant plusieurs condensateurs élémentaires (10) montés électriquement en parallèle et, pour la conduction du courant continu, une barre métallique (7) massive de pôle négatif et une barre métallique (8) de pôle positif, électriquement isolée par rapport à cette première, caractérisé par le fait que
a) les condensateurs élémentaires (10) sont disposés sur au moins un substrat (12, 32) qui se compose d'un empilage d'une feuille métallique (3, 33) de pôle positif, d'une feuille isolante (4, 34) et d'une feuille métallique (5, 35) de pôle négatif,
b) qu'en vue de la réalisation du montage en parallèle des condensateurs, les pôles positifs des condensateurs (10) sont reliés électriquement à la feuille (3, 33) de pôle positif et les pôles négatifs des condensateurs (10) sont reliés électriquement à la feuille (5, 35) de pôle négatif, et
c) dans la zone d'entrée et/ou de sortie de l'agencement de condensateurs de sortie, la barre métallique (7) de pôle négatif est électriquement reliée à la feuille métallique (5, 35) de pôle négatif et la barre métallique (8) de pôle positif est électriquement reliée à la feuille métallique (3, 33) de pôle positif.

2. Agencement suivant la revendication 1, caractérisé par le fait que les feuilles métalliques (3, 5, 33, 35) du substrat (12, 32) présentent une épaisseur de 20 à 500 µm, de préférence de 100 µm.

3. Agencement suivant la revendication 1 ou 2, caractérisé par le fait que le substrat (12) est plié une ou plusieurs fois en méandres.

4. Agencement suivant l'une des revendications précédentes, caractérisé par le fait que les barres métalliques (7, 8) et les feuilles métalliques (3, 5, 33, 35) sont constituées de cuivre.

5. Agencement suivant l'une des revendications précédentes, caractérisé par le fait que l'une des barres (7, 8) est réalisée de façon plate et sous forme de radiateur ou est montée directement de façon électriquement isolée ou non isolée sur un corps radiateur (36).

6. Agencement suivant l'une des revendications précédentes, caractérisé par le fait que le substrat (12, 32) équipé de condensateurs (10) est disposé entre les barres de courant (7, 8) et se trouve en liaison électrique de grande surface, à faible inductance avec ces dernières.

7. Agencement suivant l'une des revendications précédentes, caractérisé par le fait que des moyens, par exemple à vis, ou des liaisons soudées, sont prévus pour le contact mécanique et électrique du substrat (12, 32) avec les barres de courant (7, 8).

8. Agencement suivant l'une des revendications précédentes, caractérisé par le fait que le substrat (32) avec les feuilles (33 à 35) empilées est réalisé sous forme de plaque (24) électriquement isolante avec des doublages de cuivre (33, 35).
